# FASCICULE DE BREVET EUROPEEN

(11) **EP 2 580 882 B1**
(45) Date de publication et mention de la délivrance du brevet: **05.09.2018**
(21) Numéro de dépôt: 11724212.3
(22) Date de dépôt: 08.06.2011
(51) Int. Cl.: H04J 1/12, G08C 15/02

(54) **PROCÉDÉ D'UTILISATION D'UNE RESSOURCE FRÉQUENTIELLE PARTAGÉE, PROCÉDÉ DE FABRICATION DE TERMINAUX, TERMINAUX ET SYSTÈME DE TÉLÉCOMMUNICATIONS**
VERFAHREN ZUR VERWENDUNG EINER GETEILTEN FREQUENZRESSOURCE, VERFAHREN ZUR HERSTELLUNG VON ENDGERÄTEN, ENDGERÄTE UND TELEKOMMUNIKATIONSSYSTEM
METHOD FOR USING A SHARED FREQUENCY RESOURCE, METHOD FOR MANUFACTURING TERMINALS, TERMINALS AND TELECOMMUNICATION SYSTEM

(30) Priorité: 20.08.2010 FR 1056703; 08.06.2010 FR 1054509
(43) Date de publication de la demande: 17.04.2013
(73) Titulaire: SIGFOX, 31670 Labège (FR)
(72) Inventeur: FOURTET, Christophe, F-82170 Pompignan (FR); BAILLEUL, Thierry, F-31400 Toulouse (FR)
(74) Mandataire: Ipside
(86) Numéro de dépôt international: PCT/EP2011/059538
(87) Numéro de publication internationale: WO 2011/154466

(56) Documents cités:
- US-A- 4 345 334
- US-A- 5 295 138
- US-B1- 6 731 223

## Description

La présente invention appartient au domaine des télécommunications, notamment les télécommunications sans fil. La présente invention concerne plus particulièrement le multiplexage des signaux radioélectriques émis par des terminaux différents partageant une même ressource fréquentielle.

Les principales techniques connues de multiplexage de signaux radioélectriques dans les réseaux de télécommunications actuels, pour permettre à différents terminaux d'accéder à une ressource fréquentielle partagée pour communiquer avec une station, consistent principalement à multiplexer lesdits signaux radioélectriques :
- en les émettant dans des sous-bandes fréquentielles différentes (« Frequency Division Multiple Access » ou FDMA dans la littérature anglo-saxonne) ;
- en les émettant dans des intervalles de temps différents (« Time Division Multiple Access » ou TDMA) ;
- en étalant leur spectre fréquentiel au moyen de codes généralement sensiblement orthogonaux entre eux (« Code Division Multiple Access » ou CDMA).

Chacune de ces techniques repose sur des mécanismes d'attribution des canaux physiques (sous-bande fréquentielle, intervalle de temps, code d'étalement) aux différents terminaux qui sont souvent très complexes, dynamiques et le centralisés au niveau de la station ou du réseau en général.

Ces mécanismes d'attribution nécessitent une étroite synchronisation en temps et/ou en fréquences d'un terminal avec d'une part la station, et d'autre part les autres terminaux, par l'intermédiaire d'un protocole souvent complexe et gourmand en énergie, car requérant une mise en route fréquente de chaque terminal.

On comprend que ces mécanismes d'attribution sont notamment incompatibles avec des systèmes de télécommunications à très bas débit (de l'ordre de quelques bits par seconde), du fait que ces débits sont insuffisants pour maintenir la synchronisation entre les terminaux et la station, et/ou à très forte portée (de l'ordre de quelques dizaines de kilomètres en milieu rural), du fait qu'il est très complexe de maintenir synchronisés entre eux des terminaux qui sont très éloignés (temps de propagation, effet Doppler, etc.).

On connaît également des documents US 4345334, US 6731223 et US 5295138 des systèmes de télémétrie dans lesquels des terminaux, multiplexés en fréquences, sélectionnent eux-mêmes les sous-bandes fréquentielles dans lesquelles ils émettent des signaux radioélectriques. Toutefois, de tels systèmes de télémétrie présentent, lorsque le nombre de terminaux est important, un niveau élevé de collisions entre signaux radioélectriques émis par des terminaux différents.

La présente invention vise à résoudre les problèmes susmentionnés, et vise notamment à proposer un procédé d'utilisation d'une ressource fréquentielle partagée par plusieurs terminaux qui soit simple et peu coûteux à mettre en oeuvre, tout en garantissant un niveau faible de collisions entre signaux radioélectriques émis par des terminaux différents.

La présente invention trouve une application avantageuse, bien que nullement limitative, dans les systèmes de collecte d'informations bas débit, tels que les réseaux de capteurs dans lesquels des capteurs émettent de façon récurrente des données représentatives de la grandeur physique mesurée à destination d'une station de collecte de données. On peut citer, à titre d'exemple non limitatif, des capteurs embarqués dans des compteurs électriques ou gaz, qui émettraient des données relatives à la consommation électrique ou en gaz à une station de collecte en vue d'établir la facturation associée à cette consommation.

Selon un premier aspect, la présente invention concerne un terminal comportant des moyens de transmettre des données en direction d'une station sous la forme de signaux radioélectriques, lesdits signaux radioélectriques étant transmis en utilisant une ressource fréquentielle partagée entre une pluralité de terminaux. Le terminal est configuré pour émettre des signaux radioélectriques dont le spectre fréquentiel instantané est de largeur au moins cinq fois inférieure à une largeur fréquentielle d'opération dudit terminal, ladite largeur fréquentielle d'opération correspondant à la largeur fréquentielle effectivement occupée par un signal radioélectrique au cours du temps en tenant compte de la largeur du spectre fréquentiel instantané des signaux radioélectriques émis par ledit terminal et d'une dérive en fréquence d'un moyen de synthèse fréquentielle dudit terminal, égale à ladite largeur du spectre fréquentiel instantané à laquelle est ajoutée ladite dérive fréquentielle du moyen de synthèse fréquentielle dudit terminal.

Suivant des modes particuliers de réalisation, le terminal comporte l'une ou plusieurs des caractéristiques suivantes, prises isolément ou suivant toutes les combinaisons techniquement possibles.

De préférence, le terminal est configuré de façon statique pour transmettre des signaux radioélectriques dans une seule sous-bande fréquentielle prédéfinie de la ressource fréquentielle, ou d'après une seule séquence prédéfinie de sous-bandes fréquentielles de ladite ressource fréquentielle.

De préférence, le terminal est configuré pour déterminer de façon autonome quand émettre dans une sous-bande fréquentielle de la ressource fréquentielle partagée.

De préférence, le terminal est configuré pour déterminer de façon autonome avec quelle puissance émettre des signaux radioélectriques dans une sous-bande fréquentielle de la ressource fréquentielle partagée.

De préférence, les signaux radioélectriques sont des signaux préalablement étalés au moyen d'un code d'étalement. Avantageusement, ledit terminal est configuré de façon statique pour utiliser un seul code d'étalement prédéfini ou une séquence prédéfinie de codes d'étalement.

Selon un second aspect, la présente invention concerne un système de télécommunications comportant :
- une pluralité de terminaux selon l'invention,
- au moins une station comportant des moyens de détecter et de décoder des signaux radioélectriques émis simultanément dans des sous-bandes fréquentielles différentes de la ressource fréquentielle partagée.

De préférence, la station du système de télécommunications comporte un bloc FFT adapté à déterminer un spectre fréquentiel de la ressource fréquentielle partagée et un bloc détecteur adapté à rechercher au moins un pic d'énergie dans le spectre fréquentiel déterminé, susceptible de correspondre à un signal radioélectrique émis par un terminal.

Selon un troisième aspect, la présente invention concerne un procédé d'utilisation d'une ressource fréquentielle partagée entre une pluralité de terminaux pour émettre des données sous la forme de signaux radioélectriques à destination d'au moins une station, dans lequel chaque terminal émet des signaux radioélectriques dont le spectre fréquentiel instantané est de largeur au moins cinq fois inférieure à une largeur fréquentielle d'opération dudit terminal, ladite largeur fréquentielle d'opération correspondant à la largeur fréquentielle effectivement occupée par un signal radioélectrique au cours du temps en tenant compte de la largeur du spectre fréquentiel instantané des signaux radioélectriques émis par ledit terminal et d'une dérive en fréquence d'un moyen de synthèse fréquentielle dudit terminal, égale à ladite largeur du spectre fréquentiel instantané à laquelle est ajoutée ladite dérive fréquentielle du moyen de synthèse fréquentielle dudit terminal.

Suivant des modes particuliers de mise en oeuvre, le procédé d'utilisation d'une ressource fréquentielle partagée comporte l'une ou plusieurs des caractéristiques suivantes, prises isolément ou suivant toutes les combinaisons techniquement possibles.

De préférence, chaque terminal est préalablement configuré de façon statique pour émettre des signaux radioélectriques dans une seule sous-bande fréquentielle prédéfinie de la ressource fréquentielle, ou d'après une seule séquence prédéfinie de sous-bandes fréquentielles de ladite ressource fréquentielle.

De préférence, chaque terminal détermine de façon autonome quand émettre dans une sous-bande fréquentielle de la ressource fréquentielle partagée.

De préférence, chaque terminal détermine de façon autonome avec quelle puissance émettre des signaux radioélectriques dans une sous-bande fréquentielle de la ressource fréquentielle partagée.

Selon un quatrième aspect, la présente invention concerne un procédé de fabrication de terminaux destinés à utiliser une ressource fréquentielle partagée. Ledit procédé de fabrication comporte, pour la fabrication de chaque terminal, les étapes de :
- obtention d'au moins un nombre aléatoire ou pseudo-aléatoire en fonction d'au moins un générateur de nombres aléatoires ou pseudo-aléatoires distribués suivant une loi sensiblement uniforme,
- détermination d'une sous-bande fréquentielle de la ressource fréquentielle ou d'une séquence de sous-bandes fréquentielles de ladite ressource fréquentielle en fonction de l'au moins un nombre aléatoire ou pseudo-aléatoire,
- équipement dudit terminal avec un moyen de synthèse fréquentielle configuré de façon statique pour transmettre des signaux radioélectriques seulement dans la sous-bande fréquentielle ou seulement d'après la séquence prédéfinie de sous-bandes fréquentielles de ladite ressource fréquentielle déterminée en fonction de l'au moins un nombre aléatoire ou pseudo-aléatoire, et pour transmettre des signaux radioélectriques dont le spectre fréquentiel instantané est de largeur au moins cinq fois inférieure à une largeur fréquentielle d'opération dudit terminal, ladite largeur fréquentielle d'opération correspondant à la largeur fréquentielle effectivement occupée par un signal radioélectrique au cours du temps en tenant compte de la largeur du spectre fréquentiel instantané des signaux radioélectriques émis par ledit terminal et d'une dérive en fréquence du moyen de synthèse fréquentielle dudit terminal, égale à ladite largeur du spectre fréquentiel instantané à laquelle est ajoutée ladite dérive fréquentielle du moyen de synthèse fréquentielle dudit terminal.

Suivant des modes particuliers de mise en oeuvre, le procédé de fabrication comporte l'une ou plusieurs des caractéristiques suivantes, prises isolément ou suivant toutes les combinaisons techniquement possibles.

De préférence, l'étape de détermination de la sous-bande fréquentielle de la ressource fréquentielle ou de la séquence de sous-bandes fréquentielles de ladite ressource fréquentielle à attribuer de façon statique à un terminal comprend au moins l'une des étapes suivantes :
- sélection d'une valeur de division fractionnaire pour un synthétiseur fractionnaire de fréquences,
- sélection d'une valeur de tension de commande à appliquer à un oscillateur commandé en tension,
- sélection d'un groupe de composants à implanter dans le terminal pour modifier la fréquence d'oscillation d'un oscillateur,
- sélection d'une retouche physique à réaliser sur au moins un composant pour modifier la fréquence d'oscillation d'un oscillateur.

L'invention sera mieux comprise à la lecture de la description suivante, donnée à titre d'exemple nullement limitatif, et faite en se référant aux figures qui représentent :
- Figure 1 : une représentation schématique d'un système de télécommunications comportant une station et une pluralité de terminaux,
- Figure 2 : une représentation schématique d'un exemple d'occupation d'une sous-bande fréquentielle par un signal radioélectrique émis par un terminal,
- Figure 3 : une représentation schématique d'un exemple de variation, au cours en fonction de la température, de l'occupation d'une sous-bande fréquentielle par un terminal,
- Figure 4 : une représentation schématique d'un exemple de découpage d'une ressource fréquentielle en plusieurs plages,
- Figure 5 : une représentation schématique d'un exemple de multiplexage statistique de signaux radioélectriques dans la ressource fréquentielle partagée,
- Figure 6 : une représentation schématique d'un exemple de réalisation d'une station du système de télécommunications.

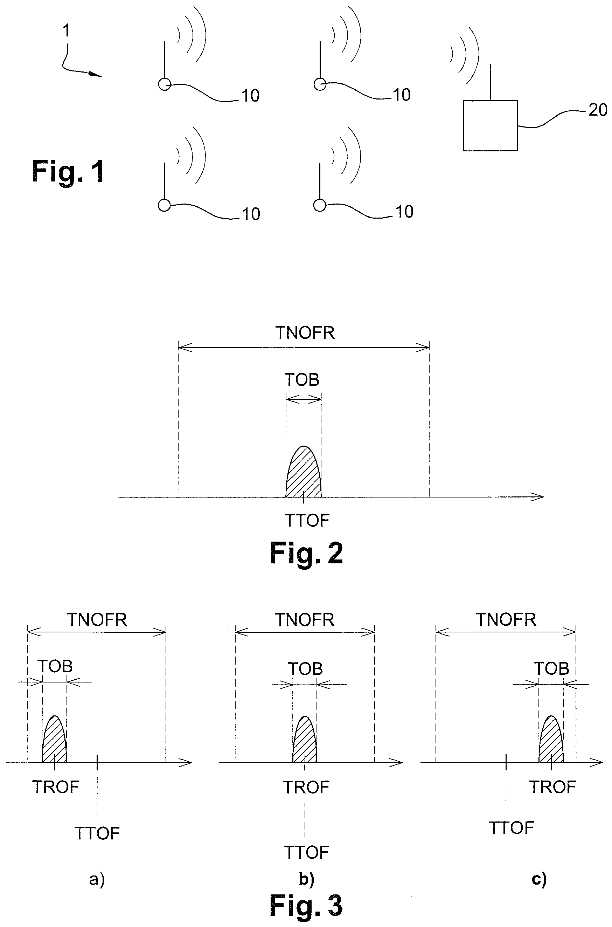

La figure 1 représente, de façon très schématique, un système 1 de télécommunications comprenant plusieurs terminaux 10 et une station 20.

L'invention concerne tout d'abord un procédé d'utilisation d'une ressource fréquentielle partagée entre plusieurs terminaux 10 pour émettre des données sous la forme de signaux radioélectriques à destination de la station 20.

Dans le contexte de l'invention, on entend de manière générale par « station » un dispositif récepteur adapté à recevoir des signaux radioélectriques dans la globalité de la ressource fréquentielle partagée. La station 20 est par exemple l'un quelconque des terminaux 10, ou un dispositif particulier tel qu'un point d'accès à un réseau filaire ou non filaire de télécommunications, centralisant les données émises par chacun des terminaux 10.

On entend par « signal radioélectrique » une onde électromagnétique se propageant via des moyens non filaires, dont les fréquences sont comprises dans le spectre traditionnel des ondes radioélectriques (quelques hertz à plusieurs centaines de gigahertz) ou dans des bandes de fréquences voisines.

Il est à noter qu'on considère principalement le cas d'une émission de données par des terminaux 10 vers la station 20. L'émission éventuelle de données par la station 20 vers les terminaux 10 sort du cadre de l'invention.

Les terminaux 10 comportent des moyens d'émettre des signaux radioélectriques, considérés comme connus de l'homme de l'art. En outre, un terminal 10 comporte de préférence un dispositif du type ordinateur programmé, comprenant notamment un processeur relié à une ou des mémoires électroniques dans lesquelles sont mémorisées des instructions de code de programme d'ordinateur. Suivant certains modes de réalisation, un terminal 10 comporte également un ou des circuits électroniques spécialisés, de type ASIC, FPGA, etc.

La station 20 comporte des moyens de recevoir des signaux radioélectriques, considérés comme connus de l'homme de l'art. En outre, la station 20 comporte de préférence un dispositif du type ordinateur programmé, comprenant notamment un processeur relié à une ou des mémoires électroniques dans lesquelles sont mémorisées des instructions de code de programme d'ordinateur. Suivant certains modes de réalisation, la station 20 comporte également un ou des circuits électroniques spécialisés, de type ASIC, FPGA, etc.

L'invention repose sur un principe de multiplexage en fréquences FDMA, c'est-à-dire que les signaux radioélectriques sont émis dans des sous-bandes fréquentielles différentes de la ressource fréquentielle.

Dans la suite de la description, on se place dans le cas non limitatif où la ressource fréquentielle est constituée d'une seule bande fréquentielle, dite « bande de multiplexage » MC (« Multiplex Channel »), de sorte qu'on utilisera la référence MC indifféremment pour la bande de multiplexage et la ressource fréquentielle. Rien n'exclut, suivant d'autres exemples non détaillés, que la ressource fréquentielle se décompose en plusieurs bandes de multiplexage différentes, éventuellement non adjacentes.

La ressource fréquentielle MC est de largeur fréquentielle désignée par « largeur fréquentielle de multiplexage » MCB (« Multiplex Channel Bandwidth »), et de fréquence centrale désignée par « fréquence centrale de multiplexage » MCCF (« Multiplex Channel Central Frequency »).

La figure 2 représente schématiquement une sous-bande fréquentielle utilisée par un terminal 10.

Une telle sous-bande fréquentielle est déterminée principalement par sa fréquence centrale, dite « fréquence typique d'opération du terminal » TTOF (« Terminal Typical Operating Frequency ») et par sa largeur, dite « largeur fréquentielle d'opération naturelle du terminal » TNOFR (« Terminal Natural Operating Frequency Range »). La largeur fréquentielle d'opération TNOFR d'un terminal 10 correspond à la largeur fréquentielle effectivement occupée par un signal radioélectrique au cours du temps, en tenant compte d'une dérive en fréquence des moyens de synthèse fréquentielle de ce terminal 10 et en tenant compte de la largeur spectrale instantanée des signaux radioélectriques émis par ledit terminal 10, dite «largeur fréquentielle occupée » TOB (« Terminal Occupied Bandwidth »).

La largeur fréquentielle d'opération TNOFR est par conséquent sensiblement égale à la largeur fréquentielle occupée TOB à laquelle est ajoutée la dérive fréquentielle D (soit TOB+D), une dérive fréquentielle D de 1 kiloHertz (kHz) étant considérée comme correspondant à une précision de ± 500 Hz (soit ± D/2) autour de la fréquence typique d'opération TTOF.

La largeur fréquentielle occupée TOB est par exemple mesurée comme étant la bande à -10 décibels (dB), c'est-à-dire comme étant l'ensemble des fréquences pour lesquelles l'énergie mesurée présente une atténuation comprise entre 0 dB et -10 dB par rapport à l'énergie maximale mesurée pour une fréquence dans la bande du signal radioélectrique. En d'autres termes, les fréquences pour lesquelles l'énergie présente une atténuation plus importante que -10 dB (soit -20 dB, -30 dB, etc.) ne sont pas prises en compte dans la mesure de la largeur fréquentielle occupée TOB. Il est à noter que d'autres conventions de mesure de la largeur fréquentielle occupée TOB peuvent être utilisées (par exemple bande à -30 dB), et le choix d'une convention de mesure particulière ne saurait être considéré comme limitatif de l'invention.

La dérive en fréquence des moyens de synthèse fréquentielle du terminal 10 a pour effet que la fréquence centrale instantanée du spectre des signaux radioélectriques émis par le terminal 10, dite «fréquence réelle d'opération du terminal » TROF (« Terminal Real Operating Frequency »), peut être sensiblement différente de la fréquence typique d'opération TTOF.

La figure 3 illustre cette dérive en fréquence de la fréquence réelle d'opération TROF par rapport à la fréquence typique d'opération TTOF du fait par exemple de la température. Les parties a), b) et c) représentent la fréquence réelle d'opération TROF dans la largeur fréquentielle d'opération TNOFR pour trois températures différentes.

De préférence, le spectre fréquentiel instantané des signaux radioélectriques émis par le terminal 10 est de largeur fréquentielle occupée TOB significativement inférieure à la dérive en fréquence d'un moyen de synthèse fréquentielle de ce terminal 10. Par « significativement inférieure », on entend que la largeur fréquentielle occupée TOB est au moins cinq fois inférieure à la largeur fréquentielle d'opération TNOFR. En d'autres termes, la largeur fréquentielle d'opération TNOFR du terminal 10 est, du fait de la dérive en fréquence des moyens de synthèse fréquentielle dudit terminal, au moins cinq fois supérieure à la largeur TOB du spectre fréquentiel instantané des signaux radioélectriques émis par ledit terminal.

Suivant des modes particuliers de réalisation, la largeur fréquentielle occupée TOB est au moins dix fois inférieure à la largeur fréquentielle d'opération TNOFR, voire au moins cent fois inférieure.

On comprend que plus le rapport entre la largeur fréquentielle occupée TOB et la largeur fréquentielle d'opération TNOFR est petit, plus la dérive en fréquence est importante. On comprend cependant que plus la dérive en fréquence tolérée est importante plus des moyens de synthèse fréquentielle à bas coût peuvent être mis en oeuvre dans chacun des terminaux 10.

En outre, le manque de stabilité intrinsèque en fréquence des terminaux 10 (c'est-à-dire leur dérive en fréquence), peut être statistiquement tiré à profit pour diminuer la probabilité de collision entre des signaux radioélectriques émis par des terminaux 10 différents.

En effet, on verra par la suite que les fréquences typiques d'opération TTOF des différents terminaux 10 seront préférentiellement déterminées en fonction d'un générateur de nombres aléatoires ou pseudo-aléatoires, de sorte que des terminaux 10 différents ne sont pas assurés de se voir attribuer des fréquences typiques d'opération TTOF différentes et/ou des sous-bandes fréquentielles qui ne se recouvrent pas. On comprend donc qu'en considérant des signaux radioélectriques de largeur fréquentielle occupée TOB significativement inférieure à la largeur fréquentielle d'opération TNOFR, la dérive en fréquences contribuera avantageusement à multiplexer en fréquences des signaux radioélectriques émis par des terminaux 10 différents dans des sous-bandes fréquentielles se recouvrant au moins partiellement.

On comprend que, plus le rapport TOB/TNOFR entre la largeur fréquentielle occupée TOB et la largeur fréquentielle d'opération TNOFR diminue, plus la probabilité de collision entre des signaux radioélectriques émis par des terminaux 10 différents diminue.

Tel qu'on l'a vu, les systèmes très bas débits, par exemple du type réseau de capteurs, sont une application préférée de l'invention, bien que nullement limitative. Dans le cas d'un système très bas débit, la largeur fréquentielle occupée TOB est par exemple de l'ordre de quelques Hertz à quelques centaines de Hertz.

La largeur fréquentielle d'opération TNOFR dépend de la technologie mise en oeuvre pour synthétiser les fréquences typiques d'opération TTOF. Dans le cas de moyens de synthèse fréquentielle comprenant un oscillateur à quartz, la précision sera par exemple de l'ordre de 2 à 40 ppm (« parts per million ») de sorte, que pour une fréquence typique d'opération TTOF égale à 1 gigahertz, la dérive en fréquence D sera sensiblement de l'ordre de 2 kHz (± 1 kHz pour la précision de 2 ppm) à 40 kHz (± 20 kHz pour la précision de 40 ppm). Dans ce cas, la largeur fréquentielle d'opération TNOFR sera sensiblement de l'ordre de 2 kHz à 40 kHz. Plus particulièrement, dans le cas d'une largeur fréquentielle occupée TOB de 100 Hz, la largeur fréquentielle d'opération TNOFR sera sensiblement de l'ordre de 2.1 kHz à 40.1 kHz, et le rapport TNOFR/TOB sera alors sensiblement de l'ordre de 21 à 401.

Dans un mode préféré de mise en oeuvre du procédé d'utilisation de la ressource fréquentielle MC, chaque terminal est préalablement configuré de façon statique pour émettre des signaux radioélectriques dans une seule sous-bande fréquentielle de la ressource fréquentielle MC, ou d'après une seule séquence préalablement définie de sous-bandes fréquentielles de ladite ressource fréquentielle, à utiliser successivement pour la transmission de signaux radioélectriques.

On note dés à présent qu'une séquence prédéfinie est une séquence de sous-bandes fréquentielles, que le terminal 10 va utiliser successivement lorsqu'il aura des signaux radioélectriques à transmettre, et ce de façon cyclique. Par « de façon cyclique », on entend que lorsque le terminal aura utilisé la dernière sous-bande fréquentielle de la séquence, il rebasculera, pour la transmission suivante, dans une utilisation de la première sous-bande fréquentielle de la séquence. De préférence, des séquences différentes sont utilisées pour configurer chacun des terminaux 10, afin de limiter la probabilité de collision entre des signaux radioélectriques émis par des terminaux 10 différents dans une même sous-bande fréquentielle.

On comprend qu'en forçant chaque terminal 10 à émettre dans une seule sous-bande fréquentielle ou suivant une séquence prédéfinie de sous-bandes fréquentielles, la configuration se fait une fois pour toutes, et chaque terminal 10 est adapté à déterminer de façon indépendante une sous-bande fréquentielle à utiliser pour l'émission de signaux radioélectriques.

Par « une fois pour toutes », on entend qu'un terminal 10, une fois configuré, utilise par défaut toujours la même sous-bande fréquentielle ou la même séquence de sous-bandes fréquentielles, de façon indépendante de la station 20, c'est-à-dire sans se synchroniser en fréquences avec ladite station 20 et sans négocier avec ladite station 20 la permission d'utiliser une sous-bande fréquentielle. En d'autres termes, la configuration d'un terminal 10, et par conséquent l'attribution d'une sous-bande fréquentielle ou d'une séquence de sous-bandes fréquentielles à ce terminal 10, est statique.

Rien n'exclut toutefois qu'un terminal 10 puisse être reconfiguré dans le temps, notamment s'il s'avère a posteriori que certaines sous-bandes fréquentielles sont inexploitables du fait de la présence, dans ces sous-bandes fréquentielles, de signaux parasites dont le niveau ne permet pas à la station 20 de décoder correctement les signaux radioélectriques transmis par des terminaux 10. Une telle reconfiguration peut par exemple s'effectuer par une mise à jour du logiciel embarqué dans un terminal 10, ou par une modification, après retour en usine, de certains composants électroniques du terminal 10.

De préférence, chaque terminal 10 détermine de façon indépendante quand émettre des signaux radioélectriques dans une sous-bande fréquentielle qui lui est attribuée de façon statique, sans se synchroniser temporellement avec ladite station 20 et sans négocier avec ladite station 20 la permission d'utiliser cette sous-bande fréquentielle à un instant donné. Dans une variante, un terminal 10 peut mettre en oeuvre un mécanisme de recherche préalable d'activité sur une sous-bande fréquentielle qui lui est attribuée de façon statique, et conditionner l'émission d'un signal radioélectrique à la non-détection dans cette sous-bande fréquentielle d'une activité radioélectrique.

En variante ou en alternative, les signaux radioélectriques sont de préférence des signaux préalablement étalés au moyen d'un code d'étalement. De préférence, chaque terminal 10 est configuré de façon statique pour utiliser un seul code d'étalement prédéfini ou une séquence prédéfinie de codes d'étalement.

La présente invention concerne également un procédé de fabrication des terminaux 10, dans lequel chaque terminal 10 est configuré de façon statique pour émettre dans une seule sous-bande fréquentielle de la ressource fréquentielle MC partagée, ou d'après une seule séquence prédéfinie de sous-bandes fréquentielles.

La configuration d'un terminal 10 s'effectue essentiellement en équipant ce terminal 10 de moyens logiciels et/ou matériels adaptés. La configuration logicielle s'effectue par exemple en mémorisant dans une mémoire électronique non volatile du terminal 10 des instructions de code de programme d'ordinateur qui, lorsqu'elles sont exécutées par un processeur du terminal 10, assurent que l'émission de signaux radioélectriques s'effectue dans la seule sous-bande fréquentielle qui lui est attribuée, ou d'après la seule séquence prédéfinie de sous-bandes fréquentielles qui lui est attribuée. La configuration matérielle s'effectue par exemple en implantant, au cours de la fabrication du terminal 10, des composants électroniques discrets spécifiques, et/ou des circuits électroniques spécialisés.

La fabrication des terminaux 10 du système 1 doit permettre d'assurer que les terminaux 10 utilisent des sous-bandes fréquentielles dont les fréquences typiques d'opération TTOF sont réparties de façon sensiblement uniforme dans la ressource fréquentielle MC partagée.

De préférence, le procédé de fabrication comporte, pour la fabrication de chaque terminal 10, les étapes de :
- obtention d'au moins un nombre aléatoire ou pseudo-aléatoire en fonction d'au moins un générateur de nombres aléatoires ou pseudo-aléatoires distribués suivant une loi sensiblement uniforme,
- détermination d'une fréquence typique d'opération TTOF ou d'une séquence de fréquences typiques d'opération TTOF en fonction de l'au moins un nombre aléatoire ou pseudo-aléatoire,
- équipement du terminal 10 avec un moyen de synthèse fréquentielle configuré de façon statique pour transmettre des signaux radioélectriques seulement dans la sous-bande fréquentielle autour de la fréquence typique d'opération TTOF déterminée, ou seulement d'après la séquence prédéfinie de sous-bandes fréquentielles autour des fréquences typiques d'opération TTOF déterminées.

Tel qu'indiqué précédemment, chaque terminal 10 est de préférence équipé d'un moyen de synthèse fréquentielle dont la dérive en fréquence est significativement supérieure à la largeur fréquentielle occupée TOB des signaux radioélectriques devant être émis par ce terminal 10, de sorte que la largeur fréquentielle occupée TOB est au moins cinq fois inférieure à la largeur fréquentielle d'opération TNOFR.

Au cours de l'étape d'obtention d'au moins un nombre aléatoire ou pseudo-aléatoire, tout type de générateur de nombres aléatoires ou pseudo-aléatoires distribués suivant une loi sensiblement uniforme peut être mis en oeuvre, le choix d'un générateur particulier ne constituant qu'une variante d'implémentation de l'invention.

Les moyens de synthèse fréquentielle, dont les terminaux 10 sont équipés, comportent de préférence au moins un oscillateur à quartz. Suivant d'autres exemples, les moyens de synthèse comportent par exemple un ou des oscillateurs à résonateurs SAW ou BAW, LC, etc., considérés connus de l'homme de l'art.

Dans le cas où les moyens de synthèse fréquentielle comportent au moins un oscillateur à quartz, on peut citer, à titre d'exemples non limitatifs, les architectures suivantes pour les moyens de synthèse fréquentielles :
- oscillateur à quartz direct, multiplié ou non,
- oscillateur à quartz suivi d'un oscillateur synchrone (sur une harmonique de l'oscillateur à quartz ou non),
- oscillateur à quartz monté en référence d'un synthétiseur à boucle de verrouillage de phase (PLL ou « Phase Locked Loop » dans la littérature anglo-saxonne) entière ou fractionnaire, combiné à un oscillateur contrôlé en tension (VCO ou « Voltage Controlled Oscillator »).

La configuration statique des terminaux 10, en fonction d'un ou de plusieurs générateurs de nombres aléatoires ou pseudo-aléatoires s'effectue suivant le principe général suivant.

On définit un intervalle de valeurs mis en correspondance avec la ressource fréquentielle MC partagée. Par « mis en correspondance », on entend que chaque valeur dans l'intervalle prédéfini est associée à une fréquence dans la ressource fréquentielle MC partagée.

De préférence, on se limite à un nombre N de fréquences typiques d'opération TTOFₙ possibles, 1 ≤ n ≤ N, qui sont avantageusement réparties régulièrement dans la ressource fréquentielle MC partagée, par exemple sensiblement espacées de MCB/N. L'intervalle prédéfini est alors un ensemble Ev de N valeurs discrètes possibles.

Pour un terminal 10 à configurer, le procédé de configuration comporte une étape d'obtention d'un nombre aléatoire ou pseudo-aléatoire de valeur comprise dans l'ensemble Ev, de sorte que la probabilité d'occurrence d'une valeur particulière dans ledit ensemble Ev est sensiblement égale à 1/N. Il est à noter que, de manière équivalente, ledit générateur peut être préalablement mis en oeuvre pour déterminer une suite de valeurs dans l'ensemble Ev de N valeurs, qui est mémorisée. Pour chaque nouveau terminal 10 à configurer, on considère la valeur suivante dans la suite préalablement mémorisée et, lorsque la dernière valeur de ladite suite est atteinte, le terminal 10 suivant est configuré avec la première valeur de ladite suite.

La conversion d'une valeur donnée, dans l'ensemble Ev de N valeurs, en une fréquence typique d'opération TTOF donnée associée à cette valeur dépend des technologies utilisées pour les moyens de synthèse fréquentielle. A partir de la valeur obtenue dans l'ensemble Ev, le procédé comporte une étape de sélection de paramètres qui vont permettre de configurer le terminal 10 de sorte à émettre des signaux radiofréquences autour de la fréquence typique d'opération associée à cette valeur. On donne ci-après des exemples non limitatifs de paramètres sélectionnés, pour différents types de moyens de synthèse fréquentielle.

Lorsque les moyens de synthèse fréquentielle comportent un synthétiseur fractionnaire, chaque fréquence typique d'opération TTOFₙ, 1 ≤ n ≤ N, peut être obtenue en programmant le synthétiseur fractionnaire avec une division fractionnaire de valeur prédéfinie Dₙ, 1 ≤ n ≤ N. Une valeur n0 donnée, dans l'ensemble Ev, correspond à une fréquence typique d'opération de valeur TTOFₙ₀, et est associée à une division fractionnaire de valeur Dₙ₀. Le terminal 10 est configuré de sorte à programmer le synthétiseur fractionnaire avec une division fractionnaire de valeur Dₙ₀.

Lorsque les moyens de synthèse fréquentielle ne comportent pas de synthétiseur fractionnaire mais son principalement constitués d'un oscillateur, plusieurs approches sont possibles pour configurer le terminal 10 pour utiliser une fréquence typique d'opération TTOFₙ₀ particulière. Certaines approches possibles sont données ci-après en considérant de manière non limitative un oscillateur à quartz.

Une première approche consiste à considérer différents oscillateurs à quartz, chaque oscillateur à quartz étant adapté à fournir une des fréquences typiques d'opération TTOFₙ possibles, 1 ≤ n ≤ N.

Une seconde approche consiste à modifier la fréquence d'oscillation d'un oscillateur à quartz au moyen d'une varicap ou autre, aux bornes de laquelle une source de tension du terminal 10 applique une tension de commande. Chaque fréquence typique d'opération TTOFₙ, 1 ≤ n ≤ N, est obtenue en appliquant une tension de valeur Vₙ prédéfinie, 1 ≤ n ≤ N. Une valeur n0 donnée, dans l'ensemble de N valeurs, correspond à une fréquence typique d'opération de valeur TTOFₙ₀, et est associée à une tension de valeur Vₙ₀. Le terminal 10 est configuré de sorte que la source de tension forme une tension de valeur Vₙ₀ aux bornes de la varicap.

Ci-après on cite des exemples non limitatifs de techniques permettant de configurer un terminal 10 de sorte qu'une source de tension de ce terminal 10 délivre une tension de valeur Vₙ₀.

Dans le cas où la source de tension est principalement constituée d'un convertisseur numérique / analogique (N/A), le terminal 10 est configuré de sorte à présenter, en entrée dudit convertisseur N/A, une valeur discrète permettant d'obtenir, en sortie dudit convertisseur N/A, la valeur Vₙ₀ souhaitée pour la tension de commande ; ladite valeur discrète est par exemple mémorisée dans une mémoire flash du terminal 10.

Dans le cas où la valeur de la tension délivrée par la source de tension est principalement déterminée par un circuit électrique, tel qu'un pont résistif ou autre, la valeur de la tension de commande générée est principalement déterminée par les valeurs des composants constituant ledit circuit électrique. Une tension de commande de valeur Vₙ₀ est obtenue par une modification appropriée des valeurs des composants formant ledit circuit électrique. Cette modification s'effectue a priori ou a posteriori :
- modification a priori : on considère N groupes de composants de valeurs différents, chaque groupe permettant d'obtenir une valeur Vₙ de tension parmi les N valeurs possibles. La valeur Vₙ₀ souhaitée pour la tension de commande est sélectionnée en fonction de la valeur obtenue dans l'ensemble Ev, et les composants du groupe permettant d'obtenir sensiblement une tension de valeur Vₙ₀, sont implantés dans le terminal 10 au cours de sa fabrication.
- modification a posteriori : un groupe de composants étant implanté dans le terminal 10, la valeur d'au moins un de ces composants est modifiée. Une telle modification s'effectue par simple manipulation (manuelle ou par un automate programmé) du composant lorsqu'il s'agit d'un composant variable (résistance, capacité ou inductance variable), ou par retouche physique dudit composant, par exemple au moyen d'un laser manipulé par un automate programmé.

Une troisième approche, pour modifier la fréquence d'oscillation d'un oscillateur à quartz, consiste à modifier directement les caractéristiques dudit oscillateur à quartz. Une telle modification s'effectue par exemple par une retouche physique d'au moins un composant passif interne à l'oscillateur à quartz (capacité, inductance), par exemple au moyen d'un laser manipulé par un automate programmé, voire par formage mécanique d'une inductance interne audit oscillateur à quartz, par un automate programmé.

Il est à noter que les exemples précédents, pour obtenir une fréquence typique d'opération TTOFₙ₀ souhaitée peuvent en outre être combinés. Une telle combinaison peut même s'avérer dans certains cas nécessaire lorsqu'une solution unique ne permettrait pas de balayer toute la ressource fréquentielle MC partagée et/ou ne permettrait pas d'avoir une précision suffisante pour différencier des fréquences typiques d'opération voisines (c'est le cas si une solution donnée ne permet pas d'avoir une précision inférieure à MCB/N).

Par exemple, on peut considérer un nombre M de groupes de composants, M étant inférieur à N, permettant d'obtenir des fréquences d'oscillation dans des plages Pₘ (1 ≤ m ≤ M) différentes de fréquences de la ressource fréquentielle MC partagée, chaque plage Pₘ comprenant P fréquences typiques d'opération TTOF possibles.

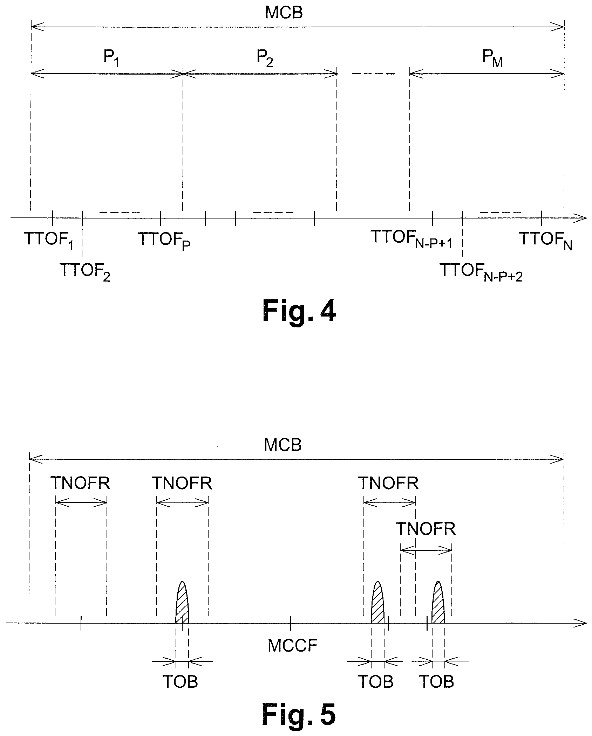

La figure 4 représente une telle division de la ressource fréquentielle MC partagée en M plages Pₘ. Suivant un exemple non limitatif, on définit M groupes de composants passifs, permettant de modifier a priori la fréquence d'oscillation d'un oscillateur à quartz. Pour une fréquence typique d'opération TTOFₙ₀ souhaitée, déterminée en fonction d'un générateur de nombres aléatoire ou pseudo-aléatoires, on détermine la plage Pₘ₀ dans laquelle se trouve ladite fréquence typique d'opération TTOFₙ₀, puis les composants du groupe associé à cette plage sont implantés dans le terminal 10. Ensuite, la valeur d'au moins un de ces composants est modifiée a posteriori de sorte à obtenir une fréquence d'oscillation sensiblement égale à la fréquence typique d'opération TTOFₙ₀.

Il est à noter que suivants certains modes de mise en oeuvre, plusieurs générateurs de nombres aléatoires ou pseudo-aléatoires sont utilisés. Suivant un exemple non limitatif, on considère un premier générateur de nombres aléatoires ou pseudo-aléatoires pour sélectionner une plage Pₘ₀ de fréquences de la ressource fréquentielle MC partagée, puis un second générateur de nombres aléatoires pour sélectionner une fréquence typique d'opération dans la plage Pₘ₀ sélectionnée.

La configuration statique d'un terminal 10 émettant des signaux radioélectriques d'après une séquence s'effectue de manière analogue en sélectionnant, en fonction d'un générateur de nombres aléatoires ou pseudo-aléatoires, plusieurs fréquences typiques d'opération. Suivant un mode particulier de mise en oeuvre, on considère un premier générateur de nombres aléatoires ou pseudo-aléatoires pour sélectionner une plage Pₘ₀ de fréquences de la ressource fréquentielle MC partagée, puis un second générateur de nombres aléatoires pour sélectionner une séquence de fréquences typiques d'opération toutes comprises dans la plage Pₘ₀.

La présente invention concerne également le système 1 de télécommunications comprenant au moins une station 20 et une pluralité de terminaux 10.

On comprend que, du fait d'une utilisation de moyens de synthèse fréquentielle dont la dérive fréquentielle est significativement supérieure à la largeur fréquentielle occupée TOB et, le cas échéant, du fait d'une configuration statique des terminaux 10 en fonction d'au moins un générateur de nombres aléatoires ou pseudo-aléatoires, les sous-bandes fréquentielles utilisées par les différents terminaux 10 ne sont pas nécessairement disjointes. Par conséquent, certaines desdites sous-bandes fréquentielles peuvent se recouvrir en tout ou partie (par exemple si la largeur fréquentielle d'opération TNOFR est supérieure à l'espacement entre fréquences typiques d'opération TTOFₙ possibles).

La figure 5 représente schématiquement un exemple de multiplexage statistique de signaux radioélectriques émis par des terminaux 10 différents dans la ressource fréquentielle MC partagée. La figure 5 illustre notamment, dans la partie droite, un cas où deux sous-bandes fréquentielles de largeur TNOFR, attribuées à des terminaux 10 différents, se recouvrent partiellement, et où la dérive en fréquence permet d'éviter une collision entre les signaux radioélectriques émis par ces terminaux.

Dans la figure 5, tous les terminaux 10 ont sensiblement la même largeur fréquentielle d'opération TNOFR. Rien n'exclut, suivant d'autres exemples, d'avoir des terminaux 10 qui ont des largeurs fréquentielles d'opération différentes.

Dans le système 1, chaque terminal 10 est configuré pour déterminer de façon autonome quand émettre dans une sous-bande fréquentielle qui lui est attribuée de façon statique et/ou avec quelle puissance émettre dans cette sous-bande fréquentielle.

La station 20 comporte de préférence des moyens de détecter et de décoder des signaux radioélectriques émis simultanément par des terminaux 10 différents dans différentes sous-bandes fréquentielles.

Ces signaux radioélectriques n'ayant aucune synchronisation, a priori, avec la station 20, celle-ci doit être capable de détecter tout signal radioélectrique apparaissant dans une bande de multiplexage MC, et de déterminer si ces signaux radioélectriques correspondent à des signaux radioélectriques émis par des terminaux 10 ou à des signaux parasites.

De préférence, la station 20 utilise une implémentation du type radio logicielle (SDR ou « Software Defined Radio » dans la littérature anglo-saxonne), par exemple l'une ou plusieurs des implémentations suivantes, citées à titre d'exemples non limitatifs :
- génération d'oscillateurs locaux internes faibles bruits pour une bonne sélectivité entre les fréquences typiques d'opération TTOFₙ, utilisant un oscillateur à quartz direct ou multiplié, un oscillateur à quartz suivi d'un oscillateur synchrone, ou un oscillateur à quartz pilotant une synthèse PLL entière à pas large, ou un oscillateur à quartz pilotant une synthèse PLL fractionnaire et/ou une DDS (« Direct Digital Synthesis »),
- translation directe en bande de base avec une fréquence d'oscillation égale à la fréquence centrale de multiplexage MCCF ou à un multiple de MCCF, ou une implémentation hétérodyne, ou à conversion analogique / numérique directe autour de la fréquence centrale de multiplexage MCCF,
- détection d'énergie dans la bande de multiplexage MC, au moyen d'un algorithme basé sur une transformée de Fourier rapide (FFT ou « Fast Fourier Transform »).
- une bande de base digitale de largeur MCB, de dynamique suffisante pour traiter une pluralité de signaux en parallèle.

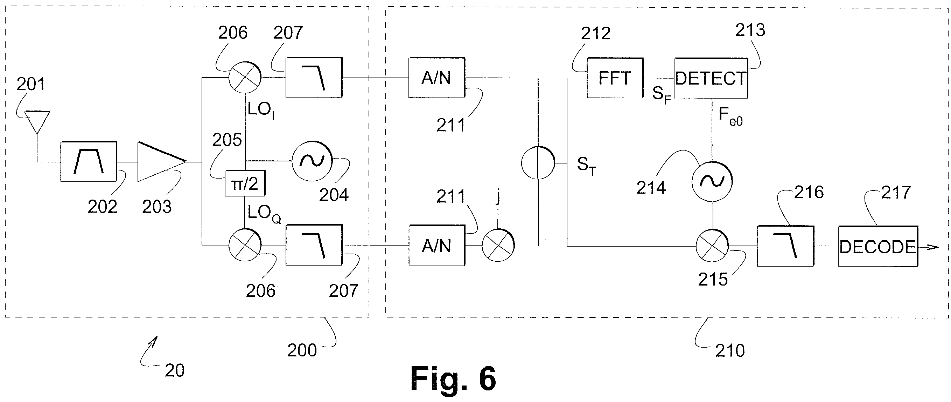

La figure 6 représente de façon schématique un mode préféré de réalisation de la station 20. On note que la station 20 peut également comporter d'autres éléments non représentés sur ladite figure 6.

Dans cet exemple non limitatif, la station 20 comporte principalement un module analogique 200 et un module numérique 210.

Tel qu'illustré par la figure 6, le module analogique 200 comporte notamment :
- une antenne 201 adaptée à recevoir des signaux radioélectriques dans la bande de multiplexage MC,
- un filtre passe-bande 202, dit « filtre d'antenne », adapté à filtrer des signaux indésirables en dehors de la bande de multiplexage MC,
- un amplificateur faible bruit 203,
- un oscillateur local 204 adapté à un signal sensiblement sinusoïdal, désigné par LO_{I}, de fréquence sensiblement égale à la fréquence centrale de multiplexage MCCF,
- un déphaseur 205 adapté à former une réplique en quadrature de phase du signal LO_{I}, désignée par LO_{Q},
- deux mélangeurs 206 adaptés à mélanger un signal en sortie du filtre d'antenne 202 avec respectivement le signal LO_{I} et le signal LO_{Q},
- deux filtres passe-bas 207 en sortie respectivement de chaque mélangeur 206, désignés par « filtres anti-repliement », de fréquence de coupure par exemple sensiblement égale à la moitié de la largeur fréquentielle de multiplexage MCB (soit MCB/2).

Tel qu'illustré par la figure 6, le module numérique 210 comporte notamment deux convertisseurs analogique / numérique (A/N) 211 adaptés à échantillonner les signaux en sortie respectivement de chaque filtre anti-repliement 207, par exemple avec une fréquence d'échantillonnage sensiblement égale à la largeur fréquentielle de multiplexage MCB.

Les signaux en sortie des convertisseurs A/N 211 correspondent respectivement à la partie réelle et à la partie imaginaire d'un signal complexe désigné par S_{T}. Cette représentation complexe est schématisée sur la figure 6 par l'addition des signaux en sortie des convertisseurs A/N 211, l'un desdits signaux étant préalablement multiplié par l'unité imaginaire j (l'unité imaginaire étant le nombre complexe tel que j² = - 1).

Le module numérique 210 comporte ensuite plusieurs blocs fonctionnels.

Tout d'abord, le module numérique 210 comporte un bloc FFT 212, adapté à transposer le signal complexe S_{T} du domaine temporel au domaine fréquentiel, de sorte à obtenir un signal complexe S_{F} représentatif du spectre fréquentiel du signal complexe S_{T}.

Le module numérique 210 comporte ensuite un bloc détecteur 213, adapté à rechercher dans le signal complexe S_{F} des fréquences pour lesquelles des pics d'énergie sont obtenus, susceptibles de correspondre à la présence d'un signal radioélectrique émis par un terminal 10.

En effet, la station 20 ne connaît pas nécessairement les fréquences utilisées par les différents terminaux 10, en particulier du fait que la fréquence réelle d'opération TROF d'un terminal 10 peut être très différente de la fréquence typique d'opération TTOF de ce terminal du fait de la dérive en fréquence. L'utilisation du bloc FFT 212 et du bloc détecteur 213 permet par conséquent de déterminer si des terminaux 10 sont en train d'émettre des signaux radioélectriques et, le cas échéant, d'estimer leurs fréquences réelles d'opération TROF.

A cet effet, le bloc FFT 212 doit être adapté à fournir un signal complexe S_{F} avec une granularité dans le domaine fréquentiel permettant de détecter un signal radioélectrique de largeur fréquentielle occupée TOB. Dans le cas où plusieurs largeurs fréquentielles occupées sont possibles, on considère de préférence la largeur fréquentielle occupée minimale TOB_{MIN}. Par exemple, en considérant une fréquence d'échantillonnage sensiblement égale à la largeur fréquentielle de multiplexage MCB, le bloc FFT 212 est par exemple configuré pour obtenir des échantillons fréquentiels, dans la bande fréquentielle allant de 0 Hz à MCB, avec un pas égal à MCB/TOB_{MIN}, soit pour les fréquences élémentaires 0, TOB_{MIN}, 2·TOB_{MIN}, 3·TOB_{MIN}, ..., MCB - TOB_{MIN}.

Le bloc détecteur 213 mesure par exemple l'énergie pour chaque fréquence élémentaire. Un critère de détection d'un signal émis par un terminal 10 est par exemple vérifié lorsque l'énergie mesurée pour une fréquence élémentaire est supérieure à un seuil prédéfini.

Lorsqu'un signal été détecté par le bloc détecteur 213, par exemple autour d'une fréquence élémentaire de valeur Fₑ₀, ladite valeur Fₑ₀ est fournie en entrée d'un bloc oscillateur local variable 214, qui génère un signal sinusoïdal de fréquence Fₑ₀ (sous la forme d'une exponentielle complexe).

Le signal sinusoïdal de fréquence Fₑ₀ est multiplié au signal complexe S_{T} au moyen d'un bloc multiplieur 215. Cette multiplication permet de ramener le signal, détecté autour de la fréquence élémentaire de valeur Fₑ₀, autour de la fréquence nulle 0 Hz.

Le module numérique 210 comporte ensuite un bloc filtre passe-bas 216, de fréquence de coupure sensiblement égale à la moitié de la largeur fréquentielle occupée TOB (soit TOB/2). Dans le cas où plusieurs largeurs fréquentielles occupées sont possibles, on considère de préférence la largeur fréquentielle occupée maximale TOB_{MAX} (soit une fréquence de coupure sensiblement égale à TOB_{MAX}/2).

Le module numérique 210 comporte ensuite un bloc décodeur 217 adapté à extraire les données émises par un terminal 10. L'implémentation exacte du bloc de décodage 217 dépend d'un protocole prédéfini de mise en forme des données émises par les terminaux 10, et met en oeuvre des moyens considérés comme connus de l'homme de l'art.

Il est à noter que le bloc détecteur 213 peut être amené à détecter plusieurs fréquences élémentaires susceptibles de correspondre à des signaux émis par des terminaux 10. Par exemple, le bloc détecteur 213 peut être amené à détecter un nombre Ns de telles fréquences élémentaires. Dans ce cas, les blocs oscillateur local variable 214, multiplieur 215, filtre passe-bas 216 et décodeur 217 sont avantageusement répliqués Ns fois afin de traiter en parallèle les signaux autour de chacune des Ns fréquences élémentaires susceptibles d'être utilisées par un terminal 10.

Avantageusement, la station 20 comporte des moyens de poursuite en fréquence de la fréquence typique d'opération TTOF d'un terminal 10, afin de suivre la dérive de celle-ci. Avantageusement, la station 20 comporte des moyens d'effectuer un filtrage adapté autour de toute fréquence typique d'opération TTOF traitée.

De manière plus générale, la portée de la présente invention ne se limite pas aux modes de mise en oeuvre et de réalisation décrits ci-dessus à titre d'exemples non limitatifs, mais s'étend au contraire à toutes les modifications à la portée de l'homme de l'art, ainsi qu'à leurs équivalents.

La présente invention permet donc d'effectuer un multiplexage statistique des signaux radioélectriques émis par des terminaux 10 différents partageant une même ressource fréquentielle MC de façon décentralisée. En effet, l'utilisation de moyens de synthèse fréquentielle dont la dérive en fréquence est supérieure à la largeur TOB spectrale instantanée des signaux radioélectriques émis par le terminal 10 permet d'obtenir un multiplexage statistique en fréquences.

En outre, les terminaux 10 sont avantageusement configurés de façon statique dès l'usine pour émettre des signaux radioélectriques dans une seule sous-bande fréquentielle prédéfinie, ou d'après une seule séquence prédéfinie de sous-bandes fréquentielles. Les fréquences typiques d'opération TTOFₙ sont attribuées de façon sensiblement aléatoire, ce qui permet également d'obtenir un multiplexage statistique en fréquences des différents signaux radioélectriques. Une telle approche peut être désignée par FSFDMA, pour « Forced Statistical FDMA ».

L'invention ne nécessite pas de synchronisation temporelle et fréquentielle des terminaux 10 entre eux et avec la station 20.

On comprend donc qu'il est possible de réaliser des terminaux 10 conformes à l'invention à faible coût, ce qui rend l'invention particulièrement adaptée aux systèmes à bas débit, tels que les réseaux de capteurs, par exemple des systèmes employant des signaux radioélectriques dont la largeur du spectre fréquentiel instantané est comprise entre 5 Hz et 5 kHz, voire préférentiellement entre 5 Hz et 500 Hz.

Le système de télécommunications selon l'invention, et notamment la station 20, est au service des terminaux 10 dans la mesure où ceux-ci décident quand et avec quelle puissance émettre, et dans la mesure où ceux-ci sont équipés de moyens de synthèse fréquentielle tels que la dérive en fréquence est très supérieure à la largeur fréquentielle occupée TOB. Ainsi, la station 20 ne connait en général pas à l'avance l'instant auquel chaque terminal 10 prévoit d'émettre et, ne connait pas non plus à l'avance la sous-bande fréquentielle qui sera utilisée par chaque terminal 10 (plus particulièrement la fréquence réelle d'opération TROF de chaque terminal 10). La station 20 doit donc effectuer une recherche de signaux radioélectriques potentiellement émis par des terminaux, et ce dans toute la bande de multiplexage MC.

## Revendications

1. Terminal (10) comportant des moyens de transmettre des données en direction d'une station (20) sous la forme de signaux radioélectriques, lesdits signaux radioélectriques étant transmis en utilisant une ressource fréquentielle partagée entre une pluralité de terminaux (10), **caractérisé en ce que** ledit terminal est configuré pour émettre des signaux radioélectriques dont le spectre fréquentiel instantané est de largeur (TOB) au moins cinq fois inférieure à une largeur fréquentielle d'opération (TNOFR) dudit terminal, ladite largeur fréquentielle d'opération correspondant à la largeur fréquentielle effectivement occupée par un signal radioélectrique au cours du temps en tenant compte de la largeur du spectre fréquentiel instantané des signaux radioélectriques émis par ledit terminal et d'une dérive en fréquence d'un moyen de synthèse fréquentielle dudit terminal, et étant sensiblement égale à ladite largeur du spectre fréquentiel instantané (TOB) à laquelle est ajoutée ladite dérive fréquentielle du moyen de synthèse fréquentielle dudit terminal.

2. Terminal (10) selon la revendication 1, **caractérisé en ce qu'**il est configuré de façon statique pour transmettre des signaux radioélectriques dans une seule sous-bande fréquentielle prédéfinie de la ressource fréquentielle, ou d'après une seule séquence prédéfinie de sous-bandes fréquentielles de ladite ressource fréquentielle.

3. Terminal (10) selon l'une des revendications 1 à 2, **caractérisé en ce qu'**il est configuré pour déterminer de façon autonome quand émettre dans une sous-bande fréquentielle de la ressource fréquentielle partagée.

4. Terminal (10) selon l'une des revendications précédentes, **caractérisé en ce qu'**il est configuré pour déterminer de façon autonome avec quelle puissance émettre des signaux radioélectriques dans une sous-bande fréquentielle de la ressource fréquentielle partagée.

5. Terminal (10) selon l'une des revendications précédentes, **caractérisé en ce que** les signaux radioélectriques sont des signaux préalablement étalés au moyen d'un code d'étalement, de préférence ledit terminal est configuré de façon statique pour utiliser un seul code d'étalement prédéfini ou une séquence prédéfinie de codes d'étalement.

6. Terminal (10) selon l'une des revendications précédentes, **caractérisé en ce que** le spectre fréquentiel instantané des signaux radioélectriques émis par ledit terminal est de largeur (TOB) au moins cent fois inférieure à la largeur fréquentielle d'opération (TNOFR) dudit terminal.

7. Système (1) de télécommunications **caractérisé en ce qu'**il comporte :
- une pluralité de terminaux (10) conformes à l'une des revendications précédentes,
- au moins une station (20) comportant des moyens de détecter et de décoder des signaux radioélectriques émis simultanément dans des sous-bandes fréquentielles différentes de la ressource fréquentielle partagée.

8. Système (1) selon la revendication 7, **caractérisé en ce que** la station (20) comporte un bloc FFT (212) adapté à déterminer un spectre fréquentiel dans la ressource fréquentielle partagée et un bloc détecteur (213) adapté à rechercher au moins un pic d'énergie, dans le spectre fréquentiel déterminé, susceptible de correspondre à un signal radioélectrique émis par un terminal (10).

9. Procédé d'utilisation d'une ressource fréquentielle partagée entre une pluralité de terminaux (10) pour émettre des données sous la forme de signaux radioélectriques à destination d'au moins une station (20), **caractérisé en ce que** chaque terminal (10) émet des signaux radioélectriques dont le spectre fréquentiel instantané est de largeur (TOB) au moins cinq fois inférieure à une largeur fréquentielle d'opération (TNOFR) dudit terminal, ladite largeur fréquentielle d'opération correspondant à la largeur fréquentielle effectivement occupée par un signal radioélectrique au cours du temps en tenant compte de la largeur du spectre fréquentiel instantané des signaux radioélectriques émis par ledit terminal et d'une dérive en fréquence d'un moyen de synthèse fréquentielle dudit terminal, et étant sensiblement égale à ladite largeur du spectre fréquentiel instantané (TOB) à laquelle est ajoutée ladite dérive fréquentielle du moyen de synthèse fréquentielle dudit terminal.

10. Procédé d'utilisation selon la revendication 9, **caractérisé en ce que** chaque terminal est préalablement configuré de façon statique pour émettre des signaux radioélectriques dans une seule sous-bande fréquentielle prédéfinie de la ressource fréquentielle, ou d'après une seule séquence prédéfinie de sous-bandes fréquentielles de ladite ressource fréquentielle.

11. Procédé d'utilisation selon l'une des revendications 9 à 10, **caractérisé en ce que** chaque terminal (10) détermine de façon autonome quand émettre dans une sous-bande fréquentielle de la ressource fréquentielle partagée.

12. Procédé d'utilisation selon l'une des revendications 9 à 11, **caractérisé en ce que** chaque terminal (10) détermine de façon autonome avec quelle puissance émettre des signaux radioélectriques dans une sous-bande fréquentielle de la ressource fréquentielle partagée.

13. Procédé d'utilisation selon l'une des revendications 9 à 12, **caractérisé en ce que** chaque terminal (10) émet des signaux radioélectriques dont le spectre fréquentiel instantané est de largeur (TOB) au moins cent fois inférieure à la largeur fréquentielle d'opération (TNOFR) dudit terminal.

14. Procédé de fabrication de terminaux (10) de télécommunications destinés à utiliser une ressource fréquentielle partagée, comportant, pour la fabrication de chaque terminal (10), les étapes de :
- obtention d'au moins un nombre aléatoire ou pseudo-aléatoire en fonction d'au moins un générateur de nombres aléatoires ou pseudo-aléatoires distribués suivant une loi sensiblement uniforme,
- détermination d'une sous-bande fréquentielle de la ressource fréquentielle ou d'une séquence de sous-bandes fréquentielles de ladite ressource fréquentielle en fonction de l'au moins un nombre aléatoire ou pseudo-aléatoire,
- équipement dudit terminal (10) avec un moyen de synthèse fréquentielle configuré de façon statique pour transmettre des signaux radioélectriques seulement dans la sous-bande fréquentielle ou seulement d'après la séquence prédéfinie de sous-bandes fréquentielles de ladite ressource fréquentielle déterminée en fonction de l'au moins un nombre aléatoire ou pseudo-aléatoire, et pour transmettre des signaux radioélectriques dont le spectre fréquentiel instantané est de largeur (TOB) au moins cinq fois inférieure à une largeur fréquentielle d'opération (TNOFR) dudit terminal, ladite largeur fréquentielle d'opération correspondant à la largeur fréquentielle effectivement occupée par un signal radioélectrique au cours du temps en tenant compte de la largeur du spectre fréquentiel instantané des signaux radioélectriques émis par ledit terminal et d'une dérive en fréquence du moyen de synthèse fréquentielle dudit terminal, et étant sensiblement égale à ladite largeur du spectre fréquentiel instantané (TOB) à laquelle est ajoutée ladite dérive fréquentielle du moyen de synthèse fréquentielle dudit terminal.

15. Procédé de fabrication selon la revendication 14, **caractérisé en ce que** l'étape de détermination de la sous-bande fréquentielle de la ressource fréquentielle ou de la séquence de sous-bandes fréquentielles de ladite ressource fréquentielle à attribuer de façon statique à un terminal (10) comprend au moins l'une des étapes suivantes :
- sélection d'une valeur de division fractionnaire pour un synthétiseur fractionnaire de fréquences,
- sélection d'une valeur de tension de commande à appliquer à un oscillateur commandé en tension,
- sélection d'un groupe de composants à implanter dans le terminal (10) pour modifier la fréquence d'oscillation d'un oscillateur,
- sélection d'une retouche physique à réaliser sur au moins un composant pour modifier la fréquence d'oscillation d'un oscillateur.

## Patentansprüche

1. Endgerät (10), das Mittel zum Übertragen von Daten in Richtung einer Station (20) in der Form von Funksignalen umfasst, wobei die Funksignale unter Verwendung einer Frequenzressource übertragen werden, die von einer Vielzahl von Endgeräten (10) gemeinsam genutzt wird, **dadurch gekennzeichnet, dass** das Endgerät dafür konfiguriert ist, Funksignale zu senden, deren momentanes Frequenzspektrum von einer Breite (TOB) ist, die mindestens fünfmal kleiner ist als eine Betriebsfrequenzbreite (TNOFR) des Endgeräts, wobei die Betriebsfrequenzbreite der Frequenzbreite entspricht, die von einem Funksignal im Laufe der Zeit effektiv belegt wird, unter Berücksichtigung der Breite des momentanen Frequenzspektrums der vom Endgerät gesendeten Funksignale und einer Frequenzabweichung eines Frequenzsynthesemittels des Endgeräts, und die im Wesentlichen gleich der Breite des momentanen Frequenzspektrums (TOB) ist, zu der die Frequenzabweichung des Frequenzsynthesemittels des Endgeräts hinzugefügt wird.

2. Endgerät (10) nach Anspruch 1, **dadurch gekennzeichnet, dass** es in statischer Weise konfiguriert ist, um Funksignale in einem einzelnen vordefinierten Teilfrequenzband der Frequenzressource, oder nach einer einzelnen vordefinierten Sequenz von Teilfrequenzbändern der Frequenzressource zu übertragen.

3. Endgerät (10) nach einem der Ansprüche 1 bis 2, **dadurch gekennzeichnet, dass** des dafür konfiguriert ist, in autonomer Weise zu ermitteln, wann in einem Teilfrequenzband der gemeinsam genutzten Frequenzressource gesendet werden soll.

4. Endgerät (10) nach einem der vorstehenden Ansprüche, **dadurch gekennzeichnet, dass** es dafür konfiguriert ist, in autonomer Weise zu ermitteln, mit welcher Leistung Funksignale in einem Teilfrequenzband der gemeinsam genutzten Frequenzressource gesendet werden sollen.

5. Endgerät (10) nach einem der vorstehenden Ansprüche, **dadurch gekennzeichnet, dass** die Funksignale Signale sind, die zuvor mittels eines Spreizcodes gespreizt wurden, wobei das Endgerät vorzugsweise in statischer Weise konfiguriert ist, um einen einzelnen vordefinierten Spreizcode oder eine vordefinierte Sequenz von Spreizcodes zu verwenden.

6. Endgerät (10) nach einem der vorstehenden Ansprüche, **dadurch gekennzeichnet, dass** das momentane Frequenzspektrum der vom Endgerät gesendeten Funksignale von einer Breite (TOB) ist, die mindestens hundertmal kleiner ist als die Betriebsfrequenzbreite (TNOFR) des Endgeräts.

7. Telekommunikationssystem (1), **dadurch gekennzeichnet, dass** es umfasst:
- eine Vielzahl von Endgeräten (10) gemäß einem der vorstehenden Ansprüche,
- mindestens eine Station (20), die Mittel zum Erkennen und zum Decodieren von Funksignalen umfasst, die gleichzeitig in verschiedenen Teilfrequenzbändern der gemeinsam genutzten Frequenzressource gesendet werden.

8. System (1) nach Anspruch 7, **dadurch gekennzeichnet, dass** die Station (20) einen FFT-Block (212) umfasst, der dazu ausgebildet ist, ein Frequenzspektrum in der gemeinsam genutzten Frequenzressource zu ermitteln, und einen Detektorblock (213), der dazu ausgebildet ist, mindestens eine Energiespitze in dem ermittelten Frequenzspektrum zu suchen, die einem von einem Endgerät (10) gesendeten Funksignal entsprechen kann.

9. Verfahren zum Verwenden einer Frequenzressource, die von einer Vielzahl von Endgeräten (10) gemeinsam genutzt wird, um Daten in der Form von Funksignalen an mindestens eine Station (20) zu senden, **dadurch gekennzeichnet, dass** jedes Endgerät (10) Funksignale sendet, deren momentanes Frequenzspektrum von einer Breite (TOB) ist, die mindestens fünfmal kleiner ist als eine Betriebsfrequenzbreite (TNOFR) des Endgeräts, wobei die Betriebsfrequenzbreite der Frequenzbreite entspricht, die von einem Funksignal im Laufe der Zeit effektiv belegt wird, unter Berücksichtigung der Breite des momentanen Frequenzspektrums der vom Endgerät gesendeten Funksignale und einer Frequenzabweichung eines Frequenzsynthesemittels des Endgeräts, und die im Wesentlichen gleich der Breite des momentanen Frequenzspektrums (TOB) ist, zu der die Frequenzabweichung des Frequenzsynthesemittels des Endgeräts hinzugefügt wird.

10. Verwendungsverfahren nach Anspruch 9, **dadurch gekennzeichnet, dass** jedes Endgerät zuvor in statischer Weise konfiguriert wird, um Funksignale in einem einzelnen vordefinierten Teilfrequenzband der Frequenzressource, oder nach einer einzelnen vordefinierten Sequenz von Teilfrequenzbändern der Frequenzressource zu senden.

11. Verwendungsverfahren nach einem der Ansprüche 9 bis 10, **dadurch gekennzeichnet, dass** jedes Endgerät (10) in autonomer Weise ermittelt, wann in einem Teilfrequenzband der gemeinsam genutzten Frequenzressource gesendet werden soll.

12. Verwendungsverfahren nach einem der Ansprüche 9 bis 11, **dadurch gekennzeichnet, dass** jedes Endgerät (10) in autonomer Weise ermittelt, mit welcher Leistung Funksignale in einem Teilfrequenzband der gemeinsam genutzten Frequenzressource gesendet werden sollen.

13. Verwendungsverfahren nach einem der Ansprüche 9 bis 12, **dadurch gekennzeichnet, dass** jedes Endgerät (10) Funksignale sendet, deren momentanes Frequenzspektrum von einer Breite (TOB) ist, die mindestens hundertmal kleiner ist als die Betriebsfrequenzbreite (TNOFR) des Endgeräts.

14. Verfahren zur Herstellung von Telekommunikationsendgeräten (10), die dazu vorgesehen sind, eine gemeinsam genutzte Frequenzressource zu verwenden, das für die Herstellung jedes Endgeräts (10) die Schritte umfasst des:
- Erhaltens von mindestens einer Zufalls- oder Pseudozufallszahl, abhängig von mindestens einem Generator von Zufalls- oder Pseudozufallszahlen, die nach einem im Wesentlichen einheitlichen Gesetz verteilt sind,
- Ermittelns eines Teilfrequenzbandes der Frequenzressource oder einer Sequenz von Teilfrequenzbändern der Frequenzressource abhängig von der mindestens einen Zufalls- oder Pseudozufallszahl,
- Ausstattens des Endgeräts (10) mit einem Frequenzsynthesemittel, das in statischer Weise konfiguriert ist, um Funksignale nur in dem Teilfrequenzband oder nur nach der vordefinierten Sequenz von Teilfrequenzbändern der Frequenzressource zu übertragen, die abhängig von der mindestens einen Zufalls- oder Pseudozufallszahl ermittelt wurde, und um Funksignale zu übertragen, deren momentanes Frequenzspektrum von einer Breite (TOB) ist, die mindestens fünfmal kleiner ist als eine Betriebsfrequenzbreite (TNOFR) des Endgeräts, wobei die Betriebsfrequenzbreite der Frequenzbreite entspricht, die von einem Funksignal im Laufe der Zeit effektiv belegt wird, unter Berücksichtigung der Breite des momentanen Frequenzspektrums der vom Endgerät gesendeten Funksignale und einer Frequenzabweichung des Frequenzsynthesemittels des Endgeräts, und die im Wesentlichen gleich der Breite des momentanen Frequenzspektrums (TOB) ist, zu der die Frequenzabweichung des Frequenzsynthesemittels des Endgeräts hinzugefügt wird.

15. Herstellungsverfahren nach Anspruch14, **dadurch gekennzeichnet, dass** der Schritt des Ermittelns des Teilfrequenzbandes der Frequenzressource oder der Sequenz von Teilfrequenzbändern der Frequenzressource, das/die einem Endgerät (10) in statischer Weise zugewiesen werden soll, mindestens einen der folgenden Schritte umfasst:
- Auswählen eines Fraktional-Divisionswertes für einen Fraktional-Frequenzsynthetisierer,
- Auswählen eines Steuerspannungswertes, der an einen spannungsgesteuerten Oszillator angelegt werden soll,
- Auswählen einer Gruppe von Komponenten, die in das Endgerät (10) integriert werden sollen, um die Oszillationsfrequenz eines Oszillators zu modifizieren,
- Auswählen eines physischen Umbaus, der an mindestens einer Komponente ausgeführt werden soll, um die Oszillationsfrequenz eines Oszillators zu modifizieren.

## Claims

1. A terminal (10) comprising means for transmitting data towards a station (20) in the form of radio signals, said radio signals being transmitted using a frequency resource (MC) shared between a plurality of terminals (10), **characterized in that** said terminal is configured to emit radio signals the instantaneous frequency spectrum of which has a bandwidth (TOB) that is at least five times lower than an operating frequency range (TNOFR) of said terminal, said operating frequency range corresponding to the frequency bandwidth effectively occupied by a radio signal over time taking into account the bandwidth of the instantaneous frequency spectrum of the radio signals emitted by said terminal and a frequency drift of a frequency synthesis means of said terminal, and being substantially equal to said bandwidth (TOB) of the instantaneous frequency spectrum to which is added said frequency drift of the frequency synthesis means of said terminal.

2. Terminal (10) according to claim 1, **characterized in that** it is configured in a static manner to transmit radio signals in a single predefined frequency subband of the frequency resource (MC), or according to a single predefined sequence of frequency subbands of said frequency resource (MC).

3. Terminal (10) according to one of claims 1 to 2, **characterized in that** it is configured to determine, in an autonomous manner, when to emit radio signals in a frequency subband of the shared frequency resource (MC).

4. Terminal (10) according to one of the previous claims, **characterized in that** it is configured to determine, in an autonomous manner, what power to use to emit radio signals in a frequency subband of the shared frequency resource (MC).

5. Terminal (10) according to one of the previous claims, **characterized in that** the radio signals are signals that have been previously spread by means of a spreading code, preferably said terminal is configured in a static manner to use a single predefined spreading code or a predefined sequence of spreading codes.

6. Terminal (10) according to one of the previous claims, **characterized in that** the instantaneous frequency spectrum of the radio signals emitted by said terminal has a bandwidth (TOB) that is at least one hundred times lower than the operating frequency range (TNOFR) of said terminal.

7. A telecommunication system (1) **characterized in that** it comprises:
- a plurality of terminals (10) according to one of the previous claims,
- at least one station (20) comprising means for detecting and decoding radio signals emitted simultaneously in different frequency subbands of the shared frequency resource (MC).

8. System (1) according to claim 7, **characterized in that** the station (20) comprises a FFT block (212) adapted to determine a frequency spectrum in the shared frequency resource (MC) and a detector block (213) adapted to search for at least one energy peak in the frequency spectrum determined, likely to correspond to a radio signal emitted by a terminal (10).

9. A method for using a frequency resource (MC) shared between a plurality of terminals (10) to emit data in the form of radio signals to at least one station (20), **characterized in that** each terminal (10) emits radio signals the instantaneous frequency spectrum of which has a bandwidth (TOB) that is at least five times lower than an operating frequency range (TNOFR) of said terminal, said operating frequency range corresponding to the frequency bandwidth effectively occupied by a radio signal over time taking into account the bandwidth of the instantaneous frequency spectrum of the radio signals emitted by said terminal and a frequency drift of a frequency synthesis means of said terminal, and being substantially equal to said bandwidth (TOB) of the instantaneous frequency spectrum to which is added said frequency drift of the frequency synthesis means of said terminal.

10. Using method according to claim 9, **characterized in that** each terminal is previously configured in a static manner to emit radio signals in a single predefined frequency subband of the frequency resource (MC), or according to a single predefined sequence of frequency subbands of said frequency resource.

11. Using method according to one of claims 9 to 10, **characterized in that** each terminal (10) determines, in an autonomous manner, when to emit radio signals in a frequency subband of the shared frequency resource (MC).

12. Using method according to one of claims 9 to 11, **characterized in that** each terminal (10) determines, in an autonomous manner, what power to use to emit radio signals in a frequency subband of the shared frequency resource (MC).

13. Using method according to one of claims 9 to 12, **characterized in that** each terminal (10) emits radio signals the instantaneous frequency spectrum of which has a bandwidth (TOB) that is at least one hundred times lower than the operating frequency range (TNOFR) of said terminal.

14. A method for manufacturing telecommunication terminals (10) designed to use a shared frequency resource (MC) **characterized in that**, for the manufacture of each terminal (10), it comprises the following steps:
- obtaining at least one random number or pseudo-random number according to at least one generator generating random or pseudo-random numbers distributed according to a substantially uniform law,
- determining a frequency subband of the frequency resource (MC) or a sequence of frequency subbands of said frequency resource (MC) according to the at least one random or pseudo-random number,
- equipping said terminal (10) with a frequency synthesis means configured in a static manner to transmit radio signals in the frequency subband only, or according to the predefined sequence of frequency subbands only of said frequency resource (MC) determined according to the at least one random or pseudo-random number, and to transmit radio signals the instantaneous frequency spectrum of which has a bandwidth (TOB) that is at least five times lower than an operating frequency range (TNOFR) of said terminal, said operating frequency range corresponding to the frequency bandwidth effectively occupied by a radio signal over time taking into account the bandwidth of the instantaneous frequency spectrum of the radio signals emitted by said terminal and a frequency drift of the frequency synthesis means of said terminal, and being substantially equal to said bandwidth (TOB) of the instantaneous frequency spectrum to which is added said frequency drift of the frequency synthesis means of said terminal.

15. Manufacturing method according to claim 14, **characterized in that** the step for determining the frequency subband of the frequency resource (MC) or the sequence of frequency subbands of said frequency resource (MC) to be assigned in a static manner to a terminal (10) comprises at least one of the following steps:
- selecting a fractional division value for a fractional frequency synthesizer,
- selecting a control voltage value to be applied to a voltage-controlled oscillator,
- selecting a group of components to be installed within the terminal (10) to modify the oscillation frequency of an oscillator,
- selecting a physical patch to be made on at least one component to modify the oscillation frequency of an oscillator.
